# EUROPEAN PATENT SPECIFICATION

(11) **EP 3 364 051 B1**
(45) Date of publication and mention of the grant of the patent: **23.03.2022**
(21) Application number: 18156805.6
(22) Date of filing: 14.02.2018
(51) Int. Cl.: F16B 5/06, B60R 13/02, F16B 21/08, F16B 21/07

(54) **A METHOD FOR MOUNTING A SHEET LIKE MEMBER ONTO A MOUNTED MEMBER BY UTILIZING A FASTENING DEVICE AND MOUNTING STRUCTURE**
VERFAHREN ZUM BEFESTIGEN EINES BOGENARTIGEN ELEMENTS AUF EINEM ANBAUTEIL MITTELS BEFESTIGUNGSVORRICHTUNG UND ZUSAMMENBAUANORDNUNG
MÉTHODE DE MONTAGE D'UN ÉLÉMENT DE TYPE FEUILLE SUR UN ÉLÉMENT FIXE UTILISANT UN DISPOSITIF DE FIXATION ET STRUCTURE DE MONTAGE

(30) Priority: 16.02.2017 JP 2017027101
(43) Date of publication of application: 22.08.2018
(73) Proprietor: Newfrey LLC, New Britain, CT 06053 (US)
(72) Inventor: AOSHIMA, Yuuki, Toyohashi-shi, Aichi 441-8540 (JP); ADACHI, Junji, Toyota-shi, Aichi 471-8571 (JP); TOMIZAWA, Yoshihito, Toyota-shi, Aichi 471-8571 (JP); KOMIYAMA, Yuto, Toyota-shi, Aichi 471-8571 (JP)
(74) Representative: Haarpatent Patentanwälte Krämer Meyer

(56) References cited:
- EP-A1- 0 717 202
- US-A1- 2009 028 667

## Description

### [Technical Field]

The present invention relates to a fastening device utilized for mounting a sheet-like member, such as a silencer and the like, onto a mounted member, such as a panel of an automobile and the like; more particularly, it relates to a fastening device for mounting a sheet-like member, which is capable of achieving a sensation of completion of fastening (the sensing of a click) when a sheet-like member is mounted onto a mounted member.

### [Prior Art]

Generally, a fastening device is utilized to mount a sheet-like member such as a silencer and the like onto a mounted member such as a panel of an automobile and the like. Various types of fastening devices for mounting such a sheet-like member are known. One example of such fastening devices as stated above is a fastening device which sandwiches the periphery of the mounting hole of the sheet-like member by a fastening member constituted with two parts, and which further causes the fastening device sandwiching the sheet-like member to be engaged with a threaded stud projecting from the mounted member.

Another example of such fastening devices is the following fastening device: it is constituted with one member; a part of the fastening device is deformed so that its diameter is expanded; and the diameter-enlarged portion and the flange sandwich a sheet-like member to be mounted onto the sheet-like member. Anchor-like locking claws of the fastening device mounted onto the sheet-like member are inserted into a mounted hole of the mounted member;

The mounted member is sandwiched between the flange of the fastening device and the locking claws of the fastening device to mount the sheet-like member to the mounted member.

As the flange and the locking claws are bent, it is possible to mount the fastening device onto the mounted member having a certain thickness range. However, when the fastening device is mounted onto a thick mounted member, the indentation load becomes high, which makes it difficult to achieve a sensation of completion of fastening (the sensing of a click).

Therefore, there are some cases where it is necessary to check whether or not the fastening device is fastened to the mounted member. When the fastening device mounted onto the sheet-like member is pulled in the direction of being pulled out from the mounted member to check whether or not fastening is completed, the checking operation might damage the sheet-like member. Moreover, the newly-created checking operation increases the number of assembly steps.

Patent Literature 1 discloses a holding device of a sheet-like member, which is inserted through a mounting hole of a sheet-like member and mounted onto the sheet-like member so as to hold both surfaces thereof. The holding device comprises a shaft member, which is inserted through a mounting hole of the sheet-like member; a flange, which is provided at one end of the shaft member and which holds one surface of the sheet-like member; a pair of pantograph-like holding pieces, which are provided at the other end of the shaft member and which are bent outward in the radial direction centering around the hinge to hold the other surface of the sheet-like member; and a head member, which connects together the ends of the holding pieces. When the holding pieces are bent, a guide member for guiding the head member toward the shaft member is formed. In order to retain the holding pieces in the bent state, locking claws are formed on the guide member and locking shoulders are formed on the shaft member.

In order to mount the holding device to a sheet-like member such as a silencer, the head of the holding device is pushed into the mounting hole of the sheet-like member, and the flange is brought into contact with the lower surface of the sheet-like member. When the head member is strongly pushed toward the flange side, the holding pieces are bent outwardly in the radial direction, and the middle part thereof spreads widely. At this time, the locking claws of the shaft member are locked to the locking shoulders of the guide member, the holding pieces maintain the expanded shape thereof, and the holding device is mounted onto the sheet-like member.

The holding device for a sheet-like member disclosed in Patent Literature 1 is mounted when the locking claws of the shaft member are locked to the locking shoulders of the guide member. However, when the holding device is mounted onto the sheet-like member, the flange bites into the sheet-like member, and the load pressing the sheet-like member between the flange and the holding pieces increases. In the case wherein the flexure load of the flange is increased by being pushed by the sheet-like member, when the fastening device is mounted onto the mounted member, the sensing of a click to suggest the completion of fastening cannot be achieved.

Patent Literature 2 discloses a fastening device comprising a grommet inserted into a mounting hole of a mounted member and a pin inserted into the grommet. The grommet comprises a flange member, which is provided on the front side of the mounting hole; a soft material member, which is integrally formed on the back side of the flange member and abutting the front side of the mounting hole; and a leg member, which extends from the back side of the flange.

The flange member comprises thin members located on the outer periphery of the leg member and thick members located on the outer periphery of the thin members. The leg member comprises a pair of locking claws, which engage with the periphery of the back surface of the mounting hole, and a pair of locking members, which are provided on the inner surface of the leg member in a protruding manner.

The pin comprises a head member, which is mounted onto a mounting base of the mounting member, and a shaft member, which extends from the head member downward in a cylindrical manner. On the shaft member of the pin, a constricted engaging concave portion, which engages with the locking member of the leg member of the grommet, is formed.

To mount this fastener, the head member of the pin is mounted onto the mounting base of the mounting member. The grommet is mounted onto the mounted hole of the mounted member, such as the panel and the like. The shaft member of the pin is inserted through the opening of the grommet into the pin-accommodating space in the leg member. The convex locking member in the leg member fits into the locking concave portion of the pin, and thus the pin is retained on the grommet.

The flange member of the grommet is constituted to be flexible due to the thin members. When the mounted member is thick, the soft material member on the back side of the flange member is crushed, shrunk and deformed; with the flange member, the thin members flex, and the peripheral edge deforms so as to be separated from the surface of the mounting hole. Therefore, the grommet can be mounted onto the mounting hole without rattling, even if the mounted member has thickness variations or irregularities.

However, when the fastener disclosed in Patent Literature 2 is mounted onto a mounted member, the convex locking member in the leg member is fitted into the locking concave of the pin. The soft material member is crushed, and the flange flexes and deforms from the thin members. Patent Literature 2 does not describe the sensing of a click to show the completion of fastening.

Patent Literature 3 discloses a stud locking device, which comprises a first clip for clamping a mounting member (sheet-like member) from both sides thereof, and a second clip; and which mounts a mounting member onto a mounted member. The first clip comprises a hollow inner cylinder member, which is inserted into the mounting hole of the mounting member; a flange, which is provided at one end of the inner cylinder member; and locking claws, which are formed on the inner side of the inner cylinder member to be engaged with the thread of the stud. The second clip comprises a hollow outer cylinder member, which accommodates the inner cylinder member of the first clip, and a flange, which is provided at one end of the outer cylinder member.

To mount the stud locking device, the inner cylinder member of the first clip is inserted into the mounting hole of the mounting member. Next, the second clip is pushed so that the inner cylinder of the first clip becomes accommodated in the outer cylinder member of the second clip. In this way, the mounting member is sandwiched between the flange of the first clip and the flange of the second clip. When the locking shoulders of the first clip and the locking member of the second clip are engaged, the mounting member is sandwiched by the flange of the first clip and the flange of the second clip.

Next, when the stud locking member mounted onto the mounting member is pressed against the stud mounted onto the mounted member, the mounting member is mounted onto the mounted member. On the flange of the second clip, two flange holes which are circumferentially elongated are formed; and the elastic edge member of the flange can be resiliently bent.

In Patent Literature 3, a stud is mounted onto a mounted member, locking claws of a stud locking member are engaged with the thread of the stud, and, thus, the mounting member is mounted onto the mounted member.

In the stud locking device disclosed in Patent Literature 3, a tapered member, the width of which narrows in the direction from the upper surface of the flange of the first clip toward the inner cylinder member along the axial center, is formed, making it possible to see the tip of the stud from above the flange through the tapered member. Therefore, it is simple to check whether or not the stud locking device is completely mounted.

Patent Literature 3 serves to check visually whether or not the stud locking device is completely mounted onto the mounted member, and it does not serve to achieve the sensing of a click, to show the completion of fastening. In addition, a flange hole is formed in the flange of the second clip, and the effects of airtightness and sound insulation created by the second clip are few.

Therefore, in the attempt to mount a sheet-like member onto a mounted member, a search has been under way for a fastening device for a sheet-like member that is excellent in air-tightness and sound insulation, is capable of achieving the sensing of a click, to show the completion of fastening, and does not require a checking operation to check the completion of fastening.

### [Prior Art Literature]

### [Patent Literature]

[Patent Literature 1] Japanese Unexamined Patent Publication No.: H8(1996)-159118 and its family member EP 0 717 202 A1.
[Patent Literature 2] Japanese Unexamined Patent Publication No.: 2011-52743
[Patent Literature 3] Japanese Unexamined Patent Publication No.: 2015-121234

### [Summary of the Invention]

### [Problem the Invention is to Solve]

Therefore, in the attempt to mount a sheet-like member onto a mounted member, the object of the present invention is to provide a fastening device for a sheet-like member that is excellent in air-tightness and sound insulation, capable of achieving the sensing of a click, to show the completion of fastening, and does not require a checking operation to check the completion of fastening.

In order to satisfy the above-stated purpose, the first aspect of the present invention is as follows:
A method for mounting a sheet-like member onto a mounted member by utilizing a fastening device,
wherein the fastening device for a sheet-like member for mounting a sheet-like member onto a mounted member comprises:
   a cylindrical shaft member,
   a flange, which is provided at the lower end of the shaft member and which has a greater diameter than that of the shaft member;
   a plurality of holding pieces, which are provided at the upper end of the shaft member and which are capable of being bent radially outward from the hinge;
   a head member, which connects the upper ends of the holding pieces together;
   a guide member, which extends from the head member in the downward direction;
   a bottom member, which is provided below the guide member; and
   a pair of anchor leg locking members, which extend obliquely upward from the bottom member;
wherein the flange has an outer peripheral part and thin member with a thickness less than that of the outer peripheral part on the inner side of the outer peripheral part, and the flange is easily bent;
built-up members are preferably provided at the root portions where the anchor leg locking members are connected to the bottom member, and the anchor leg locking members are difficult to bend; and
the guide member comprises an upper member located below the head member, guide step members located below the upper member, and a lower member located below the guide step members; and
wherein the mounting method comprises:
   a step for inserting the fastening device from below the mounting hole of the sheet-like member with the head member inserted first;
   a step for bringing the rear surface of the sheet-like member into contact with the flange,
   a step for bending the plurality of holding pieces from the hinge,
   a step for positioning the upper member of the guide member and the guide step members in a space within the shaft member,
   a step for providing the lower member of the guide member and the anchor leg locking members in a manner so as to protrude below the shaft member,
   a step for sandwiching the sheet-like member between the plurality of bent holding pieces and the flange,
   a step for inserting fastening device from above the mounted hole of the mounted member with the bottom member inserted first,
   a step for bringing the flange into contact with the upper surface of the mounted member,
   a step for providing the stepped parts of the anchor leg locking members in a manner so as to protrude below the mounted hole of the mounted member, and
   a step for sandwiching the mounted member between the flange and the stepped parts of the anchor leg locking members, wherein the step for inserting the fastening device from above the mounting hole of the mounted member with the bottom member inserted first is the final stage of pushing the fastening device into the mounted hole of the mounted member; wherein the amount of change in a second load, where the second load for pushing the anchor leg locking members into the mounted hole of the mounted member decreases be larger than or equal to the amount of change in a first load where the first load for deforming the flange by pressing the flange against the upper surface of the mounted member increases; and that the pushing load of the fastening device, which is the sum of the first load and the second load, gradually decreases or does not change at the final pushing-in stage.

If the pushing load for pushing in the fastening device gradually decreases towards the completion of mounting or does not change, the sensing of a click, to show the completion of mounting, can be achieved.

Thanks to the above-mentioned fastening device, the flange has thin member having small thickness, the flange is easily bent, the root part of the anchor leg locking members has built-up members and the anchor leg locking members are difficult to bend. When the fastening device is inserted into the mounted hole of the mounted member, the force required to deform the flange is small. The load that pushes the anchor leg locking members into the mounting hole becomes a peak value when the ends of the steps of the anchor leg locking members enter the mounting hole, and the pushing load decreases when the anchor leg locking members are pushed further in. The load that pushes in the fastening device decreases toward the completion of fastening. In this way, it becomes possible to achieve the sensing of a click, to show the completion of fastening.

The guide member comprises an upper member located below the head member, guide step members located below the upper member and a lower member located below the guide step;
wherein the maximum outer diameter of the upper member is equal to or smaller than the inner diameter of the shaft member;
the maximum outer diameter of the guide step members is equal to or smaller than the inner diameter of the shaft member;
the lateral length of the lower member is smaller than the lateral length of the upper member;
the anchor leg locking members are positioned on the lateral side of the lower member;
a space that allows the anchor leg locking members to be bent is formed between the lower member and the anchor leg locking members; and
the outer distance between the pair of anchorage locking members is greater than the inside diameter of the shaft member.

If the maximum outer diameter of the upper member and the guide step members of the guide member is equal to or smaller than the inner diameter of the shaft member, when the holding pieces are folded, the upper member and the guide step members of the guide member are accommodated within the shaft member.

The lateral length of the lower member of the guide member is less than the lateral length of the upper member;
a space is formed between the lower member and the anchor leg locking members so that the anchor leg locking members can be bent;
the anchor leg locking members are positioned on the lateral side of the lower member; and the outer distance between the pair of anchorage locking members is greater than the inside diameter of the shaft member. Then, the anchor leg locking members are bent to pass through the shaft member and spread when they come out from the shaft member. Thus, engagement with the lower surface of the mounted member is achieved.

When the holding pieces are bent from the hinge,
the upper member of the guide member is positioned in the space provided within the shaft member,
the lower member of the guide member and the anchor leg locking members protrude below the shaft member;
a pair of locking claws facing the inside of the shaft member is provided;
the guide step members of the guide member are engaged with the locking claws; and
the state in which the holding pieces are bent is preferably maintained.

A pair of locking claws facing the inside of the shaft members is provided. When the guide step members of the guide member are engaged with the locking claws, the holding pieces are bent, and the upper member of the shaft member is locked so as to remain within the shaft member.

A locking concave portion is formed at the lower end of the shaft member, and the tips of the anchor leg locking members are preferably accommodated in the locking concave portion.

When the locking concave portion is formed at the lower end of the shaft member and the tips of the anchor leg locking members are accommodated in the locking concave portion, the mounted member is stably held between the step members of the anchor leg locking members and the flange.

The second aspect of the present invention is as follows:
A mounting structure for mounting a sheet-like member onto a mounted member by utilizing a fastening device,
wherein the fastening device for a sheet-like member for mounting the sheet-like member onto the mounted member comprises:
   a cylindrical shaft member,
   a flange, which is provided at the lower end of the shaft member and which has a greater diameter than that of the shaft member;
   a plurality of holding pieces, which are provided at the upper end of the shaft member and which are capable of being bent radially outward from the hinge;
   a head member, which connects the upper ends of the holding pieces together;
   a guide member, which extends from the head member in the downward direction;
   a bottom member, which is provided below the guide member; and a pair of anchor leg locking members, which extend obliquely upward from the bottom member;
wherein the flange has an outer peripheral part and thin member with a thickness less than that of the outer peripheral part on the inner side of the outer peripheral part, and the flange is easily bent;
built-up members are preferably provided at a root part where the anchor leg locking members are connected to the bottom member, and the anchor leg locking members are difficult to bend;
the guide member comprises an upper member located below the head member, guide step members located below the upper member, and a lower member located below the guide step members;
the upper member and the guide step members of the guide member are positioned in a space within the shaft member;
the lower member of the guide member and the anchor leg locking members protrude below the shaft member,
the sheet-like member is sandwiched between the plurality of holding pieces and the flange, and
the mounted member is sandwiched between the flange and the stepped parts of the anchor leg locking members,
wherein the mounting structure according to the invention is designed and furnished for mounting the sheet-like member onto the mounted member by utilizing the fastening device in a method according to the invention.

It is preferable that the locking concave portion be formed in the lower end of the shaft member, and that the tips of the anchor leg locking members be accommodated in the locking concave portion.

### [Effects of the Invention]

According to the present invention, in an attempt to mount a sheet-like member onto a mounted member, it becomes possible to provide a fastening device for a sheet-like member that is excellent as regards air-tightness and sound insulation, is capable of achieving the sensing of a click, to show the completion of fastening, and does not require a checking operation to check the completion of fastening.

### [Brief Explanation of the Drawings]

[Figure 1] Figure 1 is a plan view of the fastening device used in the method according to one working example of the present invention.
[Figure 2] Figure 2 is a front view of the fastening device of Figure 1.
[Figure 3] Figure 3 is a right side view of the fastening device of Figure 1.
[Figure 4] Figure 4 is a bottom view of the fastening device of Figure 1.
[Figure 5] Figure 5 is a sectional view taken along line A-A of the fastening device of Figure 1.
[Figure 6] Figure 6 is a sectional view taken along line B-B of the fastening device of Figure 1.
[Figure 7] Figure 7 is a cross-sectional view taken along line J-J in Figure 2 of the fastening device of Figure 1.
[Figure 8] Figure 8 is a cross-sectional view taken along line H-H in Figure 2 of the fastening device of Figure 1.
[Figure 9] Figure 9 is a sectional view taken along line E-E in Figure 2 of the fastening device of Figure 1.
[Figure 10] Figure 10 is a partially cross-sectional front view in which the fastening device shown in Figure 1 is mounted onto a sheet-like member.
[Figure 11] Figure 11 is a partially cross-sectional front view in which the fastening device mounted on a sheet-like member shown in Figure 10 is mounted onto a mounted member.
[Figure 12] Figure 12 is a cross-sectional view of the shaft member and the flange of the fastening device.
[Figure 13] Figure 13 is an enlarged view of part D shown in Figure 12.
[Figure 14] Figure 14 is an enlarged view of the central part shown in Figure 2.
[Figure 15] Figure 15 is a cross-sectional view taken along line B-B in Figure 1 showing the state in which the fastening device is mounted onto a sheet-like member (the state which is the same as Figure 10).
[Figure 16] Figure 16 is a cross-sectional view of the state in which the fastening device is slightly pushed into the mounted hole of the mounted member from the state shown in Figure 15.
[Figure 17] Figure 17 is a cross-sectional view of the state in which the fastening device is further pushed into the mounted hole of the mounted member from the state shown in Figure 16.
[Figure 18] Figure 18 is a cross-sectional view of the stage in which the fastening device is further pushed into the mounted hole of the mounted member from the state shown in Figure 17, wherein the mounting onto the mounted member is completed.
[Figure 19] Figure 19 is a view showing a load necessary for pushing a conventional fastening device into the mounted hole of the mounted member.
[Figure 20] Figure 20 is a view showing a load necessary for pushing the fastening device shown in Figure 1 into the mounted hole of the mounted member.

### [Preferred Mode for Carrying Out the Invention]

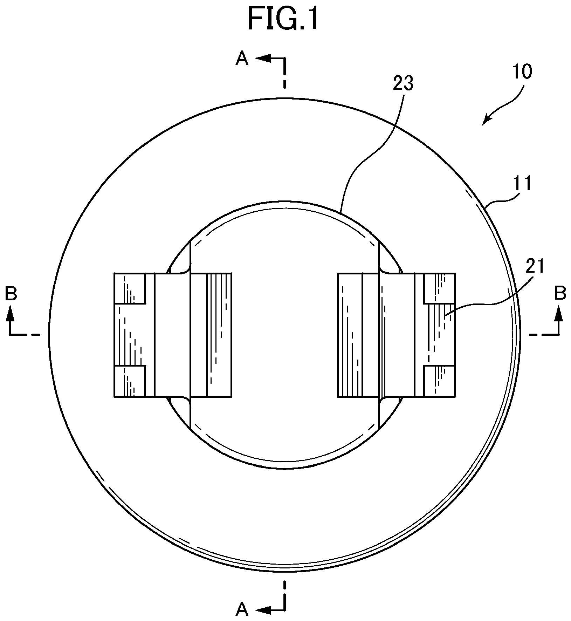

An explanation of the working examples of the present invention is provided below, with reference to the drawings. Figures 1 through 9 show fastening device 10 for a sheet-like member for use in a method according to a working example of the present invention. This fastening device 10 is utilized in order to mount sheet-like member 50 having mounting hole 51 formed therein onto mounted member 52 having mounted hole 53 formed therein.

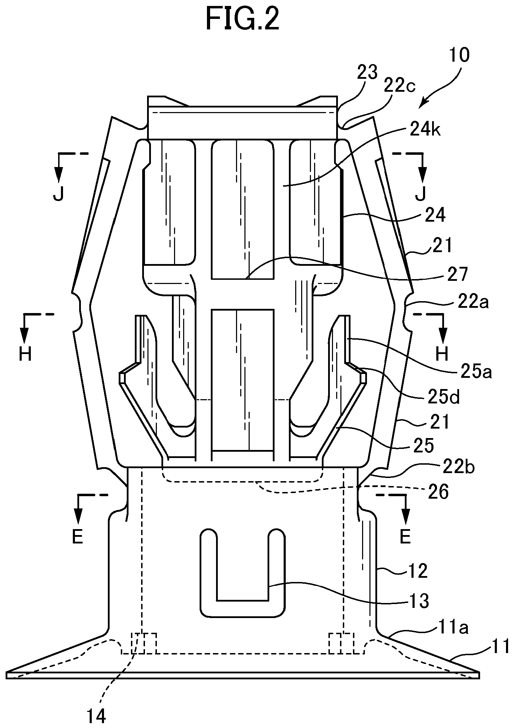

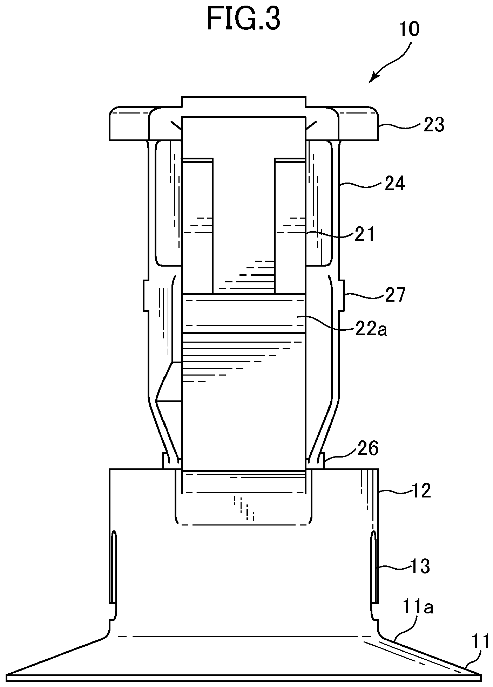

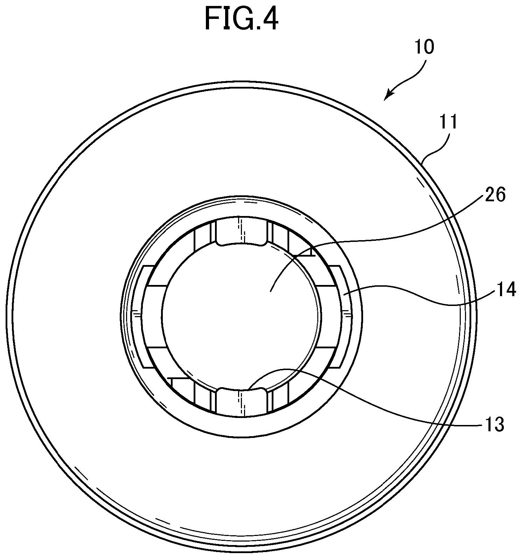

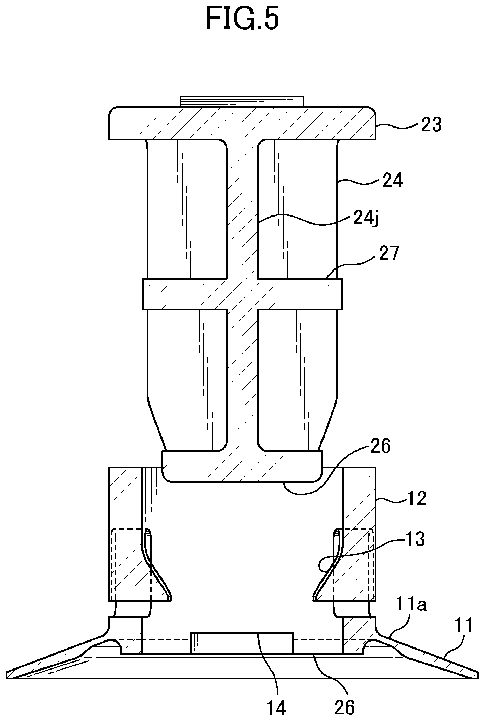

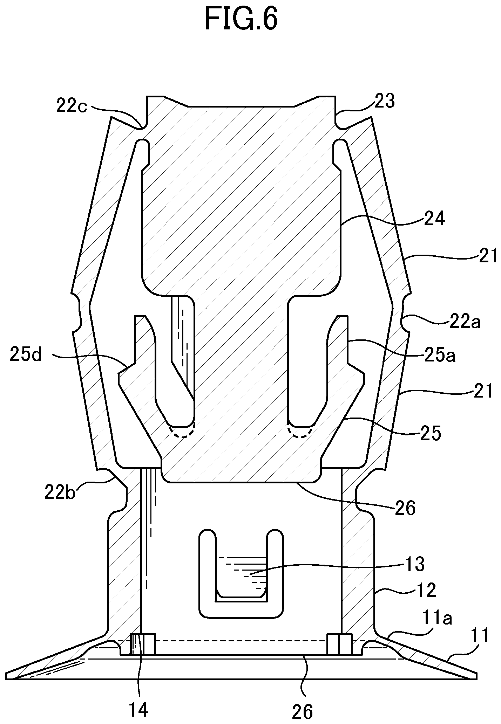

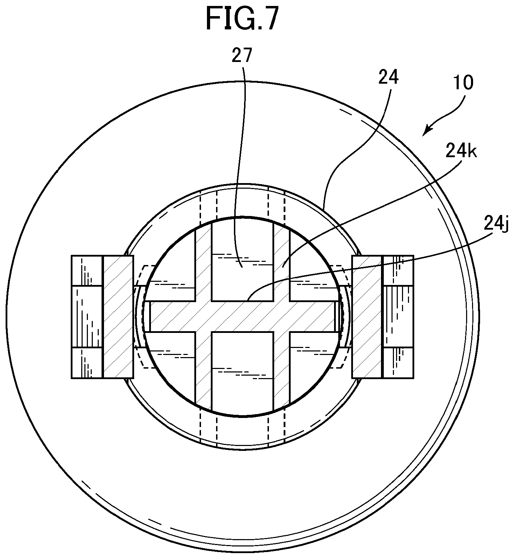

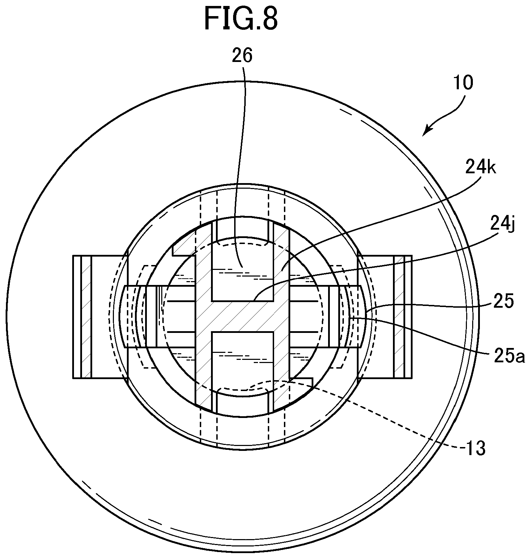

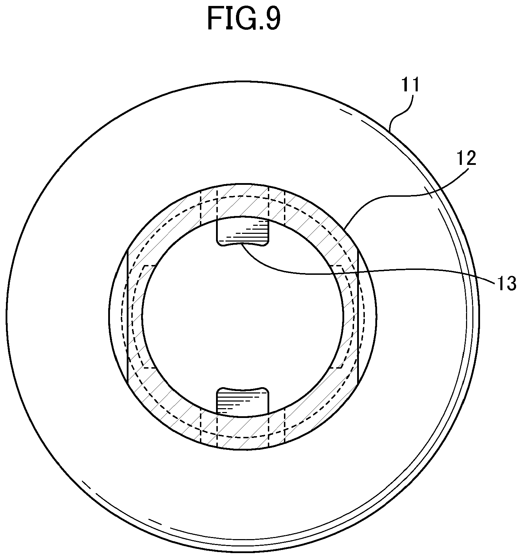

Figure 1 is a plan view; Figure 2 is a front view; Figure 3 is a right side view; and Figure 4 is a bottom view, respectively, of fastening device 10. Figure 5 is a sectional view taken along line A-A of fastening device 10 of Figure 1; and Figure 6 is a sectional view taken along line B-B of fastening device 10 of Figure 1. Figure 7 is a cross-sectional view taken along line J-J in Figure 2 of fastening device 10. Figure 8 is a cross-sectional view taken along line H-H in Figure 2 of fastening device 10. Figure 9 is a sectional view taken along line E-E in Figure 2 of fastening device 10.

In the explanation of the present invention, the upper direction, the lateral direction and the depth in Figure 2 are respectively referred to as the upper direction, the lateral direction and the depth direction.

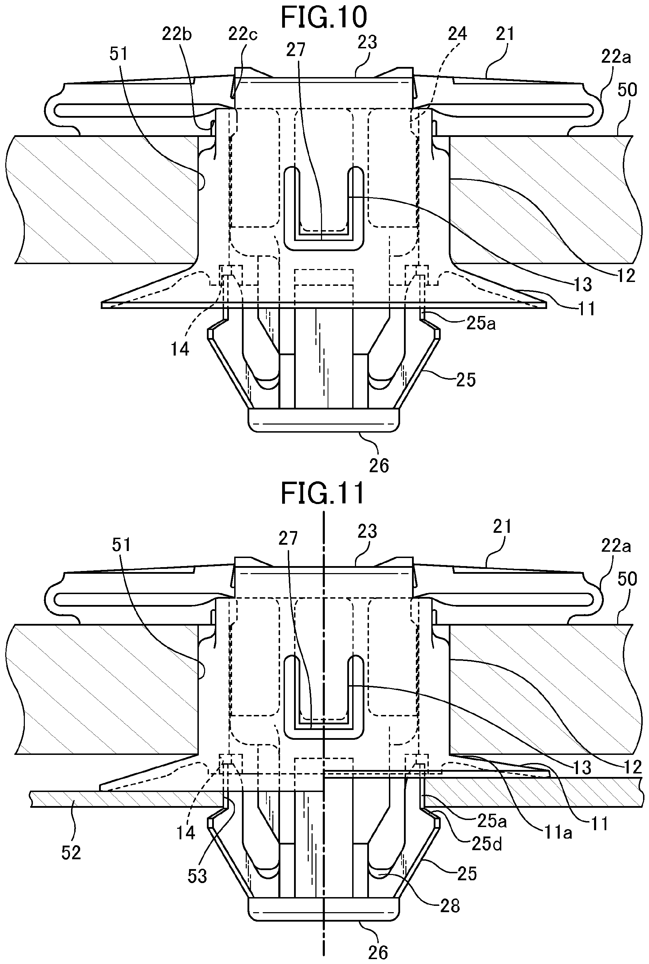

Figure 10 is a front view showing the state in which fastening device 10 is mounted onto sheet-like member 50 such as a silencer (sound insulation board) and the like. Figure 11 is a front view showing the state in which fastening device 10 mounted on sheet-like member 50 shown in Figure 10 is mounted onto mounted hole 53 of mounted member 52 such as automobile panel and the like.

Figures 1 through 9 show fastening device 10 before it is mounted onto sheet-like member 50. With reference to Figure 2 and Figure 3, fastening device 10 comprises:
cylindrical shaft member 12, which takes a cylinder-like shape and which is inserted into mounting hole 51 of sheet-like member 50;
flange 11, which is provided at the lower end of shaft member 12 and which has a greater diameter than that of mounting hole 51 of sheet-like member 50;
a plurality of holding pieces 21, which are provided at the upper end of shaft member 12;
head member 23, which connects the upper ends of holding pieces 21 together;
guide member 24, which extends from head member 23 in the downward direction;
bottom member 26, which is provided below guide member 24; and
a pair of anchor leg locking members 25, which extend obliquely upward from bottom member 26.

Figure 2 shows the state in which holding pieces 21 are not yet bent into a pantograph shape. Although the distance between the outermost end portions of holding pieces 21 is slightly greater than the inner diameter of mounting hole 51 of sheet member 50, the distance between holding pieces 21 can be shortened, and holding pieces 21 can be inserted through mounting holes 51 of sheet-like member 50.

When fastening device 10 is inserted into mounting hole 51 of sheet member 50, and head member 23 of fastening device 10 is pushed downward, holding pieces 21 are bent into a pantograph shape, and guide member 24 moves downward in the inner space of shaft member 12.

Sheet-like member 50 can be held on both sides by flange 11 and holding pieces 21, which have been bent.

Fastening device 10 comprises shaft member 12 having a cylindrical shape in a lower portion thereof. In a state where fastening device 10 is mounted onto sheet-like member 51, shaft member 12 is inserted through mounting hole 51 of sheet-like member 50. The diameter of shaft member 12 is equal to or slightly less than the inner diameter of mounting hole 51 of sheet-like member 50.

As shown in Figure 5, which is a sectional view of Figure 1 and Figure 3 taken along line A-A in Figure 1, a pair of locking claws 13 is formed at positions facing shaft member 12. Locking claws 13 extend radially inward from shaft member 12, and the lower end thereof is longer than the upper end thereof. As described later, in a state where holding pieces 21 are bent, locking claws 13 are engaged with guide step members 27 of guide member 24.

Flange 11 is formed below shaft member 12. Flange 11 spreads downward in the shape of a suction cup. The root portion where flange 11 is connected to shaft member 12 constitutes thin member (thin part) 11a having a small thickness so that flange 11 can be easily bent. In a state in which fastening device 10 is mounted onto sheet-like member 51, the root portion of flange 11 is in contact with the periphery of mounted hole 53 on the lower surface of sheet-like member 51.

As shown in Figure 4, which is a bottom view, and in Figure 9, which is a sectional view of Figure 2 taken along line E-E, the central portion of flange 11 and the lower portion of shaft 12 open downward.

As shown in Figure 6, which is a B-B cross-sectional view of Figure 1 and Figure 2, lower holding pieces 21 and upper holding pieces 21 are connected by thin hinge 22a. A pair of holding pieces 21, which are connected, are provided. Lower holding pieces 21 and shaft member 12 are connected by thin hinge 22b. Upper holding pieces 21 and head member 23 are also connected by hinge 22c. Lower holding pieces 21 and upper holding pieces 21 can be bent radially outwardly from hinge 22c and hinge 22b. The portion of the holding pieces 21 adjacent to hinge 22a expands outwardly to the greatest extent.

Head member 23, which takes a substantially disc-like shape, is formed between the upper ends of upper holding pieces 21.

Guide member 24, which extends downward, is provided below head member 23. The maximum diameter of guide member 24 is slightly smaller than the inner diameter of shaft member 12, and thus guide member 24 can be inserted into the hollow portion of shaft member 12. As shown in Figure 7, which is a J-J cross section of Figure 2, guide member 24 has wall member 24j, which extends in the lateral direction of Figure 2, and two wall members 24k, which extend in the depth direction of Figure 2. Wall member 24j and wall members 24k are sized to be accommodated in the hollow portion of shaft member 12. When holding pieces 21 are bent around hinges 22b and 22c, guide member 24 is guided downward in the hollow portion of shaft member 12. The portion without wall members 24j and 24k becomes a vacant space to reduce the weight.

Guide member 24 comprises an upper member provided below head member 23, disk-shaped guide step members 27 provided below the upper member, and a lower member provided below guide step members 27.

Guide step members 27, which take a substantially disk-like shape, are formed on an approximately central position of guide member 24. When holding pieces 21 are bent, guide step members 27 become engaged with locking claws 13 of shaft member 12, and holding pieces 21 maintain the bent shape.

Bottom member 26, which takes a substantially disk-like shape, is formed below guide member 24. As shown in Figure 6, which is a B-B sectional view of Figure 1 and Figure 2, the lower portion of guide member 24 has a narrower lateral width than that of the upper portion. A pair of anchor leg locking members 25 is formed, which extend obliquely upward from the lateral end of bottom member 26. As shown in Figure 8, which is an H-H sectional view of Figure 2, the lower portion of guide member 24 has a narrower lateral width, and there is a space between anchor leg locking members 25 and the lower portion of guide member 24, so that anchor leg locking members 25 can bend in order to approach each other.

The root portions of anchor leg locking members 25 are thicker than conventional anchor leg locking members 25, and the load necessary for bending anchor leg locking members 25 is larger.

Step members 25d are formed in the middle of anchor leg locking members 25. Anchor leg locking members 25 protrude outward the most at the end of step members 25d. Beyond step members 25d in the upward direction, tips 25a extend upward.

The distance between the ends of step members 25d of anchor leg locking members 25 that face each other is greater than the inner diameter of shaft member 12; however, anchor leg locking members 25 are capable of being bent and thus passing through shaft members 12.

A pair of locking concave portions 14 (recess) are formed inside the lower end of shaft members 12. When holding pieces 21 are bent, and fastening device 10 is mounted onto sheet-like member 50, tips 25a of anchor leg locking members 25 become accommodated in locking concave portions 14 at the lower end of shaft member 12.

With reference to Figure10 and Figure 11, the procedure for mounting fastening device 10 having such a constitution as above onto sheet-like member 50 is described below. Figure 10 is a partially cross-sectional front view in which fastening device 10 is mounted onto sheet-like member 50. Figure 11 is a partially cross-sectional front view in which fastening device 10 mounted on sheet-like member 50 is mounted onto mounted member 52.

As shown in Figure 2 and Figure 3, in fastening device 10, which is not yet mounted onto sheet-like member 50, holding pieces 21 are not spread out, and guide member 24 is positioned between holding pieces 21. With head member 23 of fastening device 10 brought into contact with mounting hole 51 from below sheet-like member 50, head member 23, holding pieces 21 and shaft member 12 are pushed into mounting hole 51 of sheet-like member 50. Flange 11 comes into contact with the lower surface of sheet-like member 50 and stops.

Next, when head member 23 is pushed in the direction of flange 11, anchor legs of anchor leg locking members 25 bend inwardly and advance through the hollow portion of shaft member 12 at the same time. Holding pieces 21 are bent radially outwardly around hinges 22b and 22c to form a flange-like shape and support the upper surface of sheet-like member 50.

When head member 23 is pushed in, guide member 24, bottom member 26 and anchor leg locking members 25 move downward inside shaft member 12. Guide member 24, bottom member 26 and anchor leg locking members 25 come out of shaft member 12 in a downward manner and advance to below flange 11. The upper part of guide member 24 enters inside shaft member 12. When guide step members 27, which are located at an intermediate position between the upper member and the lower member of guide member 24, push open locking claws 13 of shaft member 12 and emerge in the downward direction of locking claws 13, guide step members 27 become engaged with the locking claws 13. Holding pieces 21 are retained in the bent state.

Anchor leg locking members 25 of guide member 24 are narrowed in width by the inner surface of shaft member 12 and move in a downward fashion. In the locking concave portions 14 provided at the lower end of shaft member 12, tips 25a of anchor leg locking members 25 of guide member 24 are accommodated. There is a slight gap between tips 25a of anchor leg locking members 25 and the upper end of locking concave portion 14.

Thus, as shown in Figure 10, sheet-like member 50 is sandwiched between bent holding pieces 21 and flange 11 In this way, fastening device 10 is mounted onto sheet-like member 50.

The sheet thickness of sheet-like member 50 is approximately equal to the distance between the lower surface of folded lower holding pieces 21 and the inner circumference of the upper surface of flange 11. When the sheet thickness is slightly greater than the above-stated distance, the inner portion of flange 11 bites into the lower surface of sheet-like member 50 and can be stably held.

Next, with reference to Figure 11, a method for mounting fastening device 10, which has been mounted onto sheet-like member 50, onto mounted member 52 is described below. Bottom member 26 of fastening device 10 is pushed into mounted hole 53 of mounted member 52. The distance between the ends of step members 25d of anchor leg locking members 25 that face each other is greater than the inner diameter of mounted hole 53 of mounted member 52. Step members 25d of anchor leg locking members 25 are pushed from outside in the radial direction onto the inner surface of mounted hole 53, bend inward, and pass through mounted hole 53. At this time, tips 25a of anchor leg locking members 25 of guide member 24 separate inwardly from locking concave portion 14 provided at the lower end of shaft member 12. Since guide step members 27 are engaged with locking claws 13 of shaft member 12, holding pieces 21 are folded, and the state in which fastening device 10 is mounted onto sheet-like member 50 is maintained.

When the ends of step members 25d of anchor leg locking members 25 emerge in a downward manner from mounted hole 53, anchor leg locking members 25 spread outward, and step members 25d support the surrounding of mounted hole 53 of mounted member 52 from below. Tips 25a of anchor leg locking members 25 are brought in contact with the inner surface of mounted hole 53. Mounted member 52 is sandwiched between step member 25d of anchor leg locking members 25 and flange 11. The inner diameter of mounted hole 53 of mounted member 52 is substantially equal to the distance between tips 25a of anchor leg locking members 25.

Mounted member 52 is sandwiched between the lower surface of the outer peripheral part of flange 11 and the root portions of step members 25d of anchor leg locking members 25.

The right half of Figure 11 shows the case in which the thickness of mounted member 52 is great. When the thickness of mounted member 52 is great, flange 11 bends and is brought into contact with the upper surface of mounted member 52. Fastening device 10 is capable of being compatible with the thickness of mounted member 52 in a certain range. In this way, sheet-like member 50 is mounted onto mounted member 52.

According to the working examples of the present invention, the fastening device is designed in a manner so that, when fastening device 10 is pushed into mounted hole 53 of mounted member 52, the operator notices that the operation of fastening is completed; in other words, sensing a click is achieved.
The load applied when fastening device 10 is pushed into mounted hole 53 of mounted member 52 is determined by the load which pushes anchor leg locking members 25 inwardly by mounted hole 53, and the load which bends flange 11 when it is pushed by the surface of mounted member 52.

As the inner peripheral portions of flange 11 constitute thin member 11a, which is thinner than the outer peripheral part, the pushing load for pushing flange 11 is low.

In addition, on the root portions of anchor leg locking members 25, built-up members 28 are provided, and the load necessary to bend anchor leg locking members25 and push them into mounted hole 53 is high.

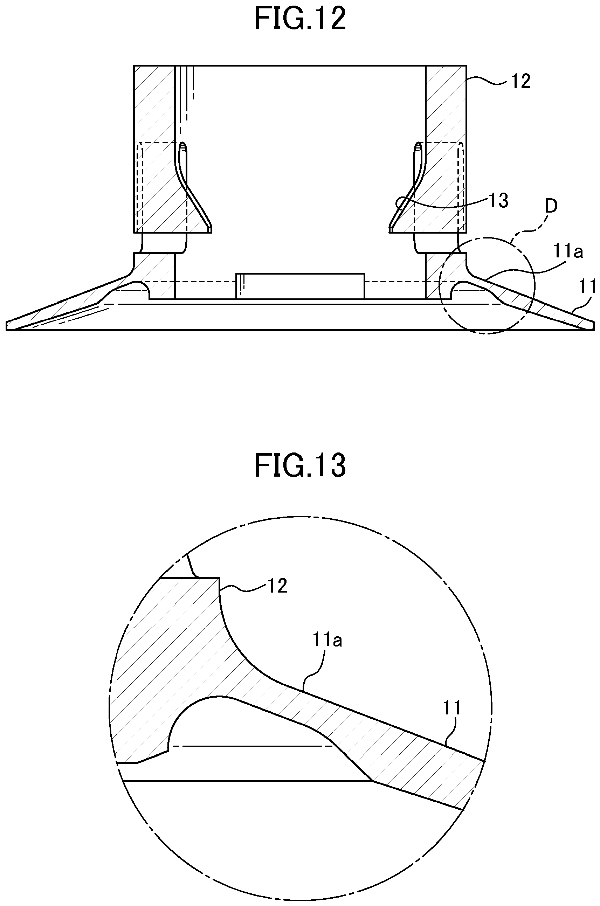

Figure 12 is an A-A cross-sectional view of Figure 1 showing shaft member 12 and flange 11, which constitute the lower part of fastening device 10. Figure 13 is an enlarged view of part D shown in Figure 12. The inner peripheral portion of flange 11 constitutes thin member 11a that are thin over their entire circumference.

As a method for reducing the bending load of flange 11, a hole could be drilled in flange 11. However, in the case of mounting a silencer by utilizing fastening device 10, if there is a hole on flange 11, there is a possibility that noise may travel to the cabin of the automobile. Therefore, in the working examples of the present invention, thin member 11a are formed on the entire circumference of flange 11 so that the bending load of flange 11 is reduced.

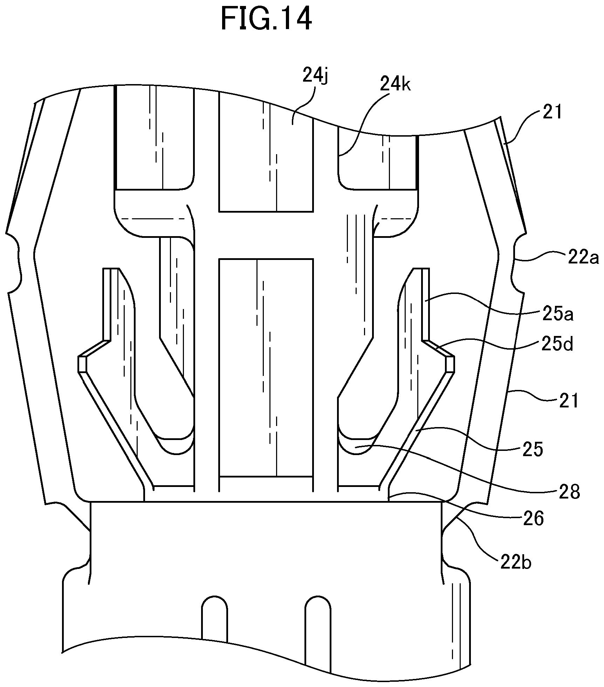

Figure 14 is an enlarged view of the central portion of Figure 2. The root portions of anchor leg locking members 25, which are connected to bottom member 26, constitute built-up members 28 with a material added to the concave portion. Built-up members 28 not only increase the height of the root portions, but also increase the thickness of the root portions. The length of anchor leg locking members 25 becomes shortened because built-up members 28 are provided, and anchor leg locking members 25 become difficult to bend, which increases the load required for bending.

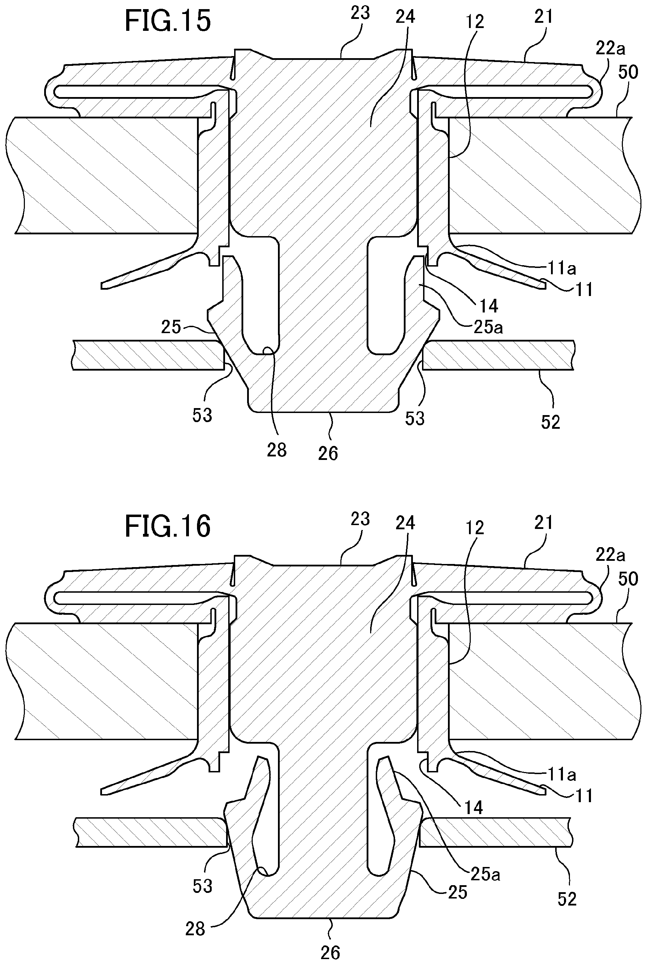

Figure 15 through Figure 18 are sectional views showing the operations from the state where fastening device 10 of the working examples of the present invention is mounted onto sheet-like member 50, to the state where fastening device 10 is mounted onto mounted member 52.
In one working example, the thickness of mounted member 52 is 0.8 mm, and the inner diameter of mounted hole 53 is 10 mm.

Figure 15 is a B-B cross-sectional view of Figure 1 showing the state in which fastening device 10 is mounted onto sheet-like member 50 (same state as in Figure 10). Holding pieces 21 are bent from hinges 21, and upper and lower holding pieces 21 are overlapped. The upper surface of sheet-like member 50 is held by folded holding pieces 21. The upper portion of guide member 24 is accommodated in the hollow portion of shaft member 12. The lower portion of guide member 24 extends substantially downward from the hollow portion of shaft member 12. Tips 25a of anchor leg locking members 25 are accommodated in locking concave portion 14. The lower surface of sheet-like member 50 is held by the upper portion of flange 11.

Load T required for pushing fastening device 10 is the sum of load P, which is required for deforming and pushing the pair of anchoring leg locking members 25 into contact with mounted hole 53, so that they are closer to one another, and load F, which deforms flange 11 on the upper surface of mounted member 52.
(A) In Figure 15, fastening device 10 is inserted into mounted hole 53 from the upper portion of mounted member 52 with bottom member 26 first. The lower portions of anchor leg locking members 25 are in contact with the upper edge portion of mounted hole 53 of mounted member 52. Anchor leg locking members 25 have not yet been deformed. At this time, load P for pushing anchor leg locking members 25 is zero. As flange 11 is not brought in contact with the upper surface of mounted member 52, the load for deforming flange 11 is also zero. Load T required for pushing fastening device 10 is zero. The stroke at this stage is 0 mm.
(B) Figure 16 shows the stage in which fastening device 10 is slightly pushed into mounted hole 53 of mounted member 52, and in which anchor leg locking members 25 are pushed by mounted hole 53 and begin to deform so as to be mutually closer (Stroke I. 5 mm).

Anchor leg locking members 25 have built-up members 28 at the root portions thereof and become difficult to bend, which rapidly increases load P for pressing anchor leg locking members 25. As flange 11 is not in contact with the upper surface of mounted member 52, load F for deforming flange 11 is zero. Load T for pushing in fastening device 10 is equal to load P for pushing anchor leg locking members 25.

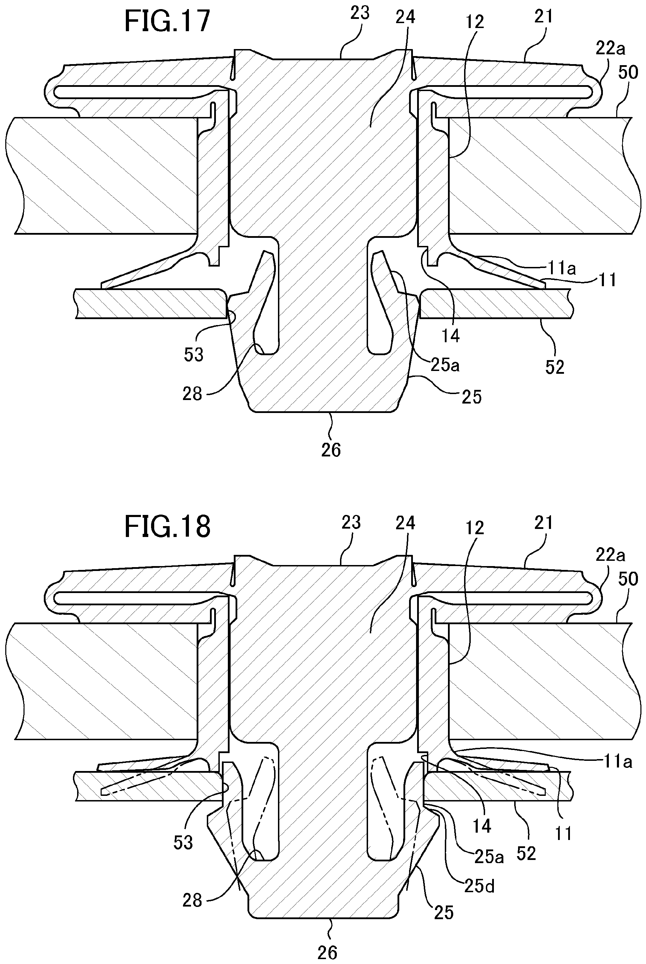

(C) Figure 17 shows the stage in which fastening device 10 is further pushed into mounted hole 53 of mounted member 52; anchor leg locking members 25 are further deformed so as to be mutually even closer (Stroke 2.7 mm).

When the end portions of the most projecting step members 25d of anchor leg locking members 25 enter mounted hole 53, no further inward bending occurs. Load P for pushing anchor leg locking members 25 is sufficient as long as it is larger than the frictional force between the end portion of step members 25d and the inner surface of mounted hole 53, and it is decreased. Flange 11 is in the stage where it is in contact with the upper surface of mounted member 52, and load F required for deforming flange 11 is zero up to this stage.

(D) Figure 18 shows the stage in which fastening device 10 is further pushed into mounted hole 53 of mounted member 52, and mounting onto mounted member 53 is completed (Stroke 3.9 mm). When the end portions of step members 25d of anchor leg locking members 25 emerge downwardly from mounted hole 53, anchor leg locking members 25 return to the approximate original shape before they receive the deformation.

As step members 25d of anchor leg locking members 25 emerge in a downward manner from mounted hole 53, load P for pushing anchor leg locking members 25 into mounted hole 53 becomes near zero. As flange 11 is deformed when it is brought in contact with the upper surface of mounted member 52, load F required for deforming flange 11 is applied. As thin member 11a are formed on flange 11, the bending load of flange 11 is small, and load F required for deforming flange 11 is small. In one example, the thickness of thin member 11a is 0.3 mm. As fastening device 10 is pushed in, the decrease in load P is greater than or equal to the increase in load F; thus, pushing load T as a whole gradually decreases or does not change as the pushing-in operation progresses.

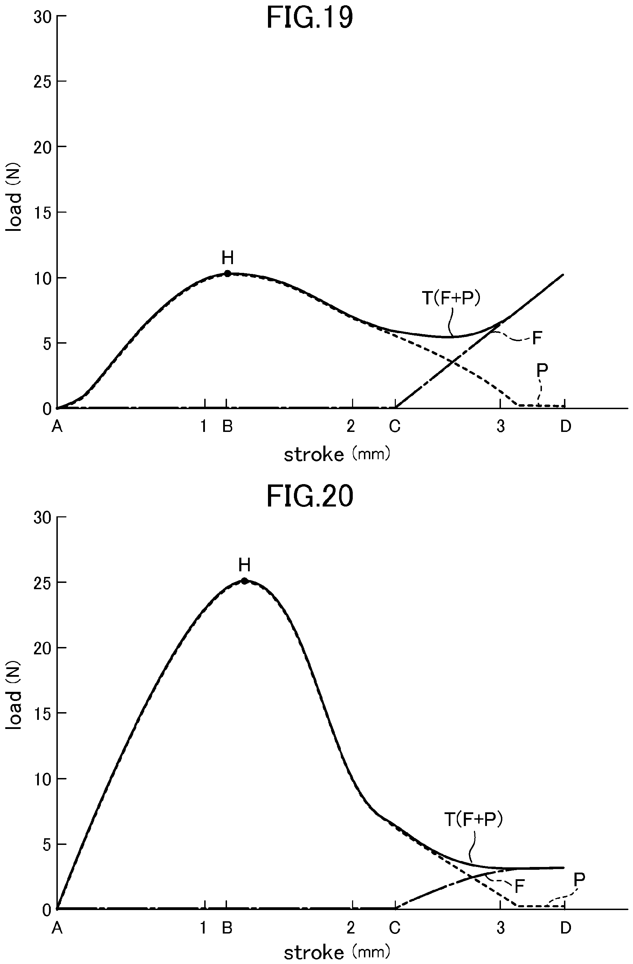

With respect to the conventional fastening device, load P for pushing anchor leg locking members 25 into mounted hole 53, and load F for deforming flange 11 on the upper surface of mounted member 52 were respectively measured in the respective stages shown in Figure 15 through Figure 18. Figure 19 shows the sum of load P and load F as load T required to pushing in fastening device 10'. In the conventional fastening device, the flange has no thin member, and the root portions of the anchor cap locking members are not thick.

Figure 20 analyzed such loads as stated above in a similar manner, with regard to fastening device 10 according to the working examples of the present invention. In fastening device 10 of the working examples, flange 11 has thin member 11a, and built-up members 28 are provided at the root portions of anchor leg locking members 25.

In Figure 19 and Figure 20, (A) shows load P for pushing in anchor leg locking members 25, load F for deforming flange 11, and load T, which is the sum of load P and load F, in the stage in which the lower portions of anchor leg locking members 25 are brought in contact with the upper edge of mounted hole 53 (Figure 15); (B) shows the load at the stage in which anchor leg locking members 25 are slightly pushed into mounted hole 53 of mounted member 52 (Figure 16); (C) shows the load at the stage in which the most protruding end of anchor leg locking members 25 enter mounted hole 53 and flange 11 is brought into contact with the upper surface of mounted member 52 (Figure 17); and (D) shows the load at the stage in which step members 25d of anchor leg locking members 25 emerge in a downward manner from mounted hole 53, flange 11 is deformed, and mounting onto mounted member 53 is completed (Figure 18).

With reference to Figure 19, in conventional fastening device 10', load P for pushing anchor latch locking members 25' gradually increases in (A)-(B). Load F for deforming flange 11' is zero. Total load T, which is the sum of P and F, is equal to the load P. The reference numerals regarding conventional fastening device 10' are indicated by *' [single quotation mark].*

### T=P

In (B)-(C), as step members 25d of anchor leg locking members 25' are entered in mounted hole 53, load P for pushing anchor leg locking members 25' into mounted hole 53 gradually decreases. As flange 11' is not in contact with mounted member 52, load F for deforming flange 11' is zero. Total load T, which is the sum of P and F, is equal to the load P, and gradually decreases.

### T=P

In (C)-(D), load P for pushing anchor leg locking members 25' decreases. As flange 11' is in contact with mounted member 52 in (C), load F for deforming flange 11' starts to increase rapidly from (C). As flange 11' has no thin member, is hardly deformed, and load F rapidly increases, total load T, which is the sum of P and F, increases again.

### T=P+F

Therefore, after peak load H is exceeded, the load decreases, and the pushing load continues to increase until the fastening operation is completed thereafter; thus, it has been difficult for the operator to understand how far s/he should continue the pushing-in operation in order to complete the fastening.

With reference to Figure 20, in fastening device 10 according to the working examples of the present invention, in (A)-(B), load P for pushing anchor leg locking members 25 increases. As built-up members 28 are provided at the root portion of anchor leg locking members 25, anchor leg locking members 25 hardly deforms, and load P rapidly increases. Load F for deforming flange 11 is zero. Total load T, which is the sum of P and F, is equal to the load P.

In (B)-(C), as step members 25d of anchor leg locking members 25 are in mounted hole 53, load P for pushing anchor leg locking members gradually decreases. As flange 11 is not in contact with mounted member 52, load F for deforming flange 11 is zero. Total load T, which is the sum of P and F, is equal to the load P, and gradually decreases.

In (C)-(D), load P for pushing anchor leg locking members 25 gradually decreases. As flange 11 is in contact with mounted member 52 in (C), load F for deforming flange 11 starts to gradually increase from (C). As flange 11 has thin member 11a formed thereon, it is easily deformed, and thus load F gradually increases. As the decrease of load P is greater than or equal to the increase of load F, total load T, which is the sum of P and F, gradually decreases or does not change.

Therefore, in (A)-(D) as a whole, the pushing load becomes high; when peak load H is exceeded, the pushing load thereafter decreases, and it decreases or does not change until the fastening is completed. This makes it easier for the operator to notice the completion of fastening.

According to the present working examples, built-up members 28 are provided at the root portion of anchor leg locking members 25 of fastening device 10; and thus, anchor leg locking members 25 are deformed so that the load for pushing anchor leg locking members 25 into mounted hole 53 is increased. Moreover, thin member 11a is formed on flange 11 so that the deformation load of flange 11 is decreased. As a result, when fastening device 10 is pushed into mounted hole 53 of mounted member 52, load P for pushing anchor leg locking members 25 rapidly increases as the fastening device is pushed in, and the load rapidly decreases when peak load H is exceeded. At the stage when load P for pushing in anchor leg locking members 25 decreases, load F for deforming flange 11 gradually increases. The amount of change at which load P for pushing anchor leg locking members 25 decreases is greater or equal to the amount of change at which load F for deforming flange 11 increases. Therefore, as the stage of fastening completion is nearly achieved, total pushing load T decreases or does not change. In an attempt to mount sheet-like member onto a mounted member by utilizing the fastening device, it has become possible to achieve the sensing of a click, to show the completion of fastening.

### [Explanation of Reference Numerals]

- 10:: Fastening device
- 11:: Flange
- 11a:: Thin member
- 12:: Shaft member
- 13:: Locking claw
- 14:: Locking concave portion
- 21:: Holding piece
- 22a, 22b, 22c:: Hinge
- 23:: Head member
- 24:: Guide member
- 24k, 24j:: Wall member
- 25:: Anchor leg locking member
- 25a:: Tip
- 25d:: Step member
- 26:: Bottom member
- 27:: Guide step member
- 28:: Built-up member
- 50:: Sheet-like member
- 51:: Mounting hole
- 52:: Mounted member
- 53:: Mounted hole

## Claims

1. A method for mounting a sheet-like member (50) onto a mounted member (52) by utilizing a fastening device (10),
wherein the fastening device (10) for a sheet-like member (50) for mounting a sheet-like member (50) onto a mounted member (52) comprises:
a cylindrical shaft member (12);
a flange (11), which is provided at the lower end of the shaft member (12) and which has a greater diameter than that of the shaft member (12);
a plurality of holding pieces (21), which are provided at the upper end of the shaft member (12) and which are capable of being bent radially outward from hinges (22);
a head member (23), which connects the ends of the holding pieces (21) together;
a guide member (24), which extends from the head member (23) in the downward direction;
a bottom member (26), which is provided below the guide member (24); and
a pair of anchor leg locking members (25), which extend obliquely upward from the bottom member (26);
built-up members (28) are provided at a root part where the anchor leg locking members (25) are connected to the bottom member (26), and the anchor leg locking members (25) are difficult to bend; and
the guide member (24) comprises an upper member located below the head member (23), guide step members (27) located below the upper member, and a lower member located below the guide step members (27); and
wherein the mounting method comprises:
a step for inserting the fastening device (10) from below the mounting hole of the sheet-like member (50) with the head member (23) inserted first;
a step for bringing the rear surface of the sheet-like member (50) into contact with the flange (11),
a step for bending the plurality of holding pieces (21) from the hinges (22),
a step for positioning the upper member of the guide member (24) and the guide step members (27) in a space within the shaft member (12),
a step for providing the lower member of the guide member (24) and the anchor leg locking members (25) in a manner so as to protrude below the shaft member (12),
a step for sandwiching the sheet-like member (50) between the plurality of bent holding pieces (21) and the flange (11),
a step for inserting fastening device (10) from above the mounted hole (53) of the mounted member (52) with the bottom member (26) inserted first,
a step for bringing the flange (11) into contact with the upper surface of the mounted member (52),
a step for providing the stepped parts of the anchor leg locking members (25) in a manner so as to protrude below the mounted hole (53) of the mounted member (52), and
a step for sandwiching the mounted member (52) between the flange (11) and the stepped parts of the anchor leg locking members (25),
**characterized in that** the flange (11) has an outer peripheral part and thin member (11a) with a thickness less than that of the outer peripheral part on the inner side of the outer peripheral part, and the flange (11) is easily bent;
wherein the step for inserting the fastening device (10) from above the mounting hole of the mounted member (52) with the bottom member (26) inserted first is the final stage of pushing the fastening device (10) into the mounted hole (53) of the mounted member (52);
and wherein the amount of change in a second load, at which the second load for pushing the anchor leg locking members (25) into the mounted hole(53) of the mounted member (52) becomes smaller, is larger than or equal to the amount of change in a first load, at which the first load for deforming the flange (11) by pressing the flange (11) against the upper surface of the mounted member (52) becomes larger; and
the pushing load of the fastening device (10), which is the sum of the first load and the second load, gradually decreases or does not change at the final pushing-in stage.

2. A mounting structure comprising a sheet-like member (50), a mounted member (52) and a fastening device (10) for mounting the sheet-like member (50) onto the mounted member (52) wherein the fastening device (10) comprises:
a cylindrical shaft member (12);
a flange (11), which is provided at the lower end of the shaft member (12) and which has a greater diameter than that of the shaft member; (12)
a plurality of holding pieces (21), which are provided at the upper end of the shaft member (12) and which are capable of being bent radially outward from hinges (22);
a head member (23), which connects the upper ends of the holding pieces (21) together;
a guide member (24), which extends from the head member (23) in the downward direction;
a bottom member (26), which is provided below the guide member (24); and
a pair of anchor leg locking members (25), which extend obliquely upward from the bottom member (26);
built-up members (28) are provided at a root part where the anchor leg locking members (25) are connected to the bottom member (26), and the anchor leg locking members (25) are difficult to bend;
the guide member (24) comprises an upper member located below the head member (23), guide step members (27) located below the upper member, and a lower member located below the guide step members (27);
the upper member and the guide step members (27) of the guide member (24) are positioned in a space within the shaft member (12);
the lower member of the guide member (24) and the anchor leg locking members (25) protrude below the shaft member (12);
the sheet-like member (50)
is sandwiched between the plurality of holding pieces (21) and the flange (11), and
the mounted member (52) is sandwiched between the flange (11) and stepped parts of the anchor leg locking members (25),
**characterized in that** the flange (11) has an outer peripheral part and thin member (11a) with a thickness less than that of the outer peripheral part on the inner side of the outer peripheral part, and the flange (11) is easily bent;
wherein the mounting structure is designed and furnished for mounting the sheet-like member (50) onto the mounted member (52) by utilizing the fastening device (10) in a method according to claim 1.

3. Mounting structure of Claim 2,
wherein a locking concave portion (14) is formed at the lower end of the shaft member (12), and the tips (25a) of the anchor leg locking members (25) are accommodated in the locking concave portion (14).

## Patentansprüche

1. Verfahren zum Montieren eines blattartigen Elements (50) an einem montierten Element (52) unter Verwendung einer Befestigungsvorrichtung (10),
wobei die Befestigungsvorrichtung (10) für ein blattartiges Element (50) zum Anbringen eines blattartigen Elements (50) an einem montierten Element (52) umfasst:
ein zylindrisches Schaftelement (12);
einen Flansch (11), der am unteren Ende des Schaftelements (12) angeordnet ist und einen größeren Durchmesser hat als der des Schaftelements (12);
eine Mehrzahl von Haltestücken (21), die am oberen Ende des Schaftelements (12) vorgesehen sind und die von Scharnieren (22) radial nach außen gebogen werden können;
ein Kopfelement (23), das die Enden der Haltestücke (21) miteinander verbindet;
ein Führungselement (24), das sich von dem Kopfelement (23) in Abwärtsrichtung erstreckt;
ein unteres Element (26), das unter dem Führungselement (24) angeordnet ist; und
ein Paar Ankerschenkelverriegelungselemente (25), die sich vom Bodenelement (26) schräg nach oben erstrecken;
an einem Wurzelteil, wo die Ankerschenkelverriegelungselemente (25) mit dem Bodenelement (26) verbunden und die Ankerschenkelverriegelungselemente (25) schwer zu biegen sind, sind Aufbauelemente (28) angeordnet; und
das Führungselement (24) umfasst ein unter dem Kopfelement (23) angeordnetes oberes Element, unter dem oberen Element angeordnete Führungsstufenelemente (27) und ein unter den Führungsstufenelementen (27) angeordnetes unteres Element; und
wobei das Montageverfahren umfasst:
einen Schritt zum Einsetzen der Befestigungsvorrichtung (10) von unterhalb des Befestigungslochs des blattartigen Elements (50) mit dem Kopfelement (23) voran;
einen Schritt zum Inkontaktbringen der hinteren Fläche des blattartigen Elements (50) mit dem Flansch (11),
einen Schritt zum Biegen der Mehrzahl von Halteteilen (21) von den Scharnieren (22),
eine Stufe zum Positionieren des oberen Elements des Führungselements (24) und der Führungsstufenelemente (27) in einem Raum innerhalb des Schaftelements (12),
einen Schritt zum Anordnen des unteren Elements des Führungselements (24) und der Ankerschenkelverriegelungselemente (25) in einer Weise, dass sie unter das Schaftelement (12) vorstehen,
einen Schritt zum Einpferchen des blattartigen Elements (50) zwischen die Mehrzahl von gebogenen Haltestücken (21) und den Flansch (11),
einen Schritt zum Einsetzen der Befestigungsvorrichtung (10) von oberhalb des montierten Lochs (53) des montierten Elements (52) mit dem unteren Element (26) voran,
einen Schritt zum Inkontaktbringen des Flansches (11) mit der oberen Fläche des montierten Elements (52),
einen Schritt zum Bereitstellen der abgestuften Teile der Ankerschenkelverriegelungselemente (25) in einer Weise, dass sie unter das montierte Loch (53) des montierten Elements (52) vorstehen, und
eine Stufe zum Einpferchen des montierten Elements (52) zwischen dem Flansch (11) und den abgestuften Teilen der Ankerschenkelverriegelungselemente (25),
**dadurch gekennzeichnet, dass** der Flansch (11) einen Außenumfangsteil und ein dünnes Element (11a) mit einer geringeren Dicke als die des Außenumfangsteils an der Innenseite des Außenumfangsteils aufweist und der Flansch (11) einfach gebogen wird;
wobei der Schritt zum Einsetzen der Befestigungsvorrichtung (10) von oberhalb des Befestigungslochs des montierten Elements (52) mit dem Bodenelement (26) voran der letzte Schritt des Einschiebens der Befestigungsvorrichtung (10) in das montierte Loch (53) des montierten Elements (52) ist;
und wobei der Änderungsbetrag einer zweiten Last, bei dem die zweite Last zum Drücken der Ankerschenkelverriegelungselemente (25) in das montierte Loch (53) des montierten Elements (52) kleiner wird, größer oder gleich dem Änderungsbetrag einer ersten Last ist, bei dem die erste Last zum Verformen des Flansches (11) durch Drücken des Flansches (11) gegen die obere Fläche des montierten Elements (52) größer wird; und
dass die Schublast der Befestigungsvorrichtung (10), die die Summe der ersten Last und der zweiten Last ist, in der letzten Einschubstufe allmählich abnimmt oder sich nicht ändert.

2. Montagestruktur mit einem blattartigen Element (50), einem montierten Element (52) und einer Befestigungsvorrichtung (10) zum Montieren des plattenförmigen Elements (50) an dem montierten Element (52),
wobei die Befestigungsvorrichtung (10) umfasst:
ein zylindrisches Schaftelement (12);
einen Flansch (11), der am unteren Ende des Schaftelements (12) angeordnet ist und einen größeren Durchmesser hat als der des Schaftelements; (12)
eine Mehrzahl von Haltestücken (21), die am oberen Ende des Schaftelements (12) angeordnet sind und die von Scharnieren (22) radial nach außen gebogen werden können;
ein Kopfelement (23), das die oberen Enden der Haltestücke (21) miteinander verbindet;
ein Führungselement (24), das sich von dem Kopfelement (23) in Abwärtsrichtung erstreckt;
ein unteres Element (26), das unter dem Führungselement (24) angeordnet ist; und
ein Paar Ankerschenkelverriegelungselemente (25), die sich vom Bodenelement (26) schräg nach oben erstrecken;
an einem Wurzelteil, wo die Ankerschenkel-Verriegelungselemente (25) mit dem Bodenelement (26) verbunden sind und die Ankerschenkel-Verriegelungselemente (25) schwer zu biegen sind, sind Aufbauelemente (28) angeordnet;
das Führungselement (24) umfasst ein unter dem Kopfelement (23) angeordnetes oberes Element, unter dem oberen Element angeordnete Führungsstufenelemente (27) und ein unter den Führungsstufenelementen (27) angeordnetes unteres Element;
das obere Element und die Führungsstufenelemente (27) des Führungselements (24) sind in einem Raum innerhalb des Schaftelements (12) positioniert;
das untere Element des Führungselements (24) und die Ankerschenkel-Verriegelungselemente (25) ragen unter dem Schaftelement (12) hervor;
das blattartige Element (50) ist zwischen der Mehrzahl von Haltestücken (21) und dem Flansch (11) eingepfercht, und
das montierte Element (52) ist zwischen dem Flansch (11) und abgestuften Teilen der Ankerschenkel-Verriegelungselemente (25) eingepfercht,
**dadurch gekennzeichnet, dass** der Flansch (11) einen Außenumfangsteil und ein dünnes Element (11a) mit einer geringeren Dicke als die des Außenumfangsteils an der Innenseite des Außenumfangsteils aufweist und der Flansch (11) einfach gebogen wird;
wobei die Montagestruktur ausgelegt und eingerichtet ist zum Montieren des blattartigen Elements (50) auf dem montierten Element (52) unter Verwendung der Befestigungsvorrichtung (10) in einem Verfahren nach Anspruch 1.

3. Montagestruktur nach Anspruch 2,
wobei ein konkaver Verriegelungsabschnitt (14) am unteren Ende des Schaftelements (12) ausgebildet ist und die Spitzen (25a) der Ankerschenkelverriegelungselemente (25) in dem konkaven Verriegelungsabschnitt (14) aufgenommen sind.

## Revendications

1. Procédé de montage d'un élément en forme de feuille (50) sur un élément monté (52) en utilisant un dispositif de fixation (10),
dans lequel le dispositif de fixation (10) pour un élément en forme de feuille (50) destiné à monter un élément en forme de feuille (50) sur un élément monté (52) comprend :
un élément d'arbre cylindrique (12) ;
une bride (11), qui est prévue à l'extrémité inférieure de l'élément d'arbre (12) et qui présente un diamètre plus grand que celui de l'élément d'arbre (12) ;
une pluralité de pièces de maintien (21), qui sont prévues à l'extrémité supérieure de l'élément d'arbre (12) et qui sont capables d'être pliées radialement vers l'extérieur à partir des charnières (22) ;
un élément de tête (23), qui relie les extrémités des pièces de maintien (21) ensemble ;
un élément de guidage (24), qui s'étend depuis l'élément de tête (23) dans la direction vers le bas ;
un élément inférieur (26), qui est prévu sous l'élément de guidage (24) ; et
une paire d'éléments de verrouillage de jambe d'ancrage (25), qui s'étendent obliquement vers le haut depuis l'élément inférieur (26) ;
des éléments construits (28) sont prévus au niveau d'une partie de racine où les éléments de verrouillage de jambe d'ancrage (25) sont reliés à l'élément inférieur (26), et les éléments de verrouillage de jambe d'ancrage (25) sont difficiles à plier ; et
l'élément de guidage (24) comprend un élément supérieur situé sous l'élément de tête (23), des éléments de gradin de guidage (27) situés en-dessous de l'élément supérieur et un élément inférieur situé sous les éléments de gradin de guidage (27) ; et
dans lequel le procédé de montage comprend :
une étape d'insertion du dispositif de fixation (10) depuis le dessous du trou de montage de l'élément en forme de feuille (50) avec l'élément de tête (23) inséré en premier ;
une étape destinée à amener la surface arrière de l'élément en forme de feuille (50) en contact avec la bride (11),
une étape de pliage de la pluralité de pièces de maintien (21) à partir des charnières (22),
une étape destinée à positionner l'élément supérieur de l'élément de guidage (24) et les éléments de gradin de guidage (27) dans un espace à l'intérieur de l'élément d'arbre (12),
une étape destinée à fournir l'élément inférieur de l'élément de guidage (24) et les éléments de verrouillage de jambe d'ancrage (25) de manière à faire saillie sous l'élément d'arbre (12),
une étape destinée à prendre en sandwich l'élément en forme de feuille (50) entre la pluralité de pièces de maintien pliées (21) et la bride (11),
une étape d'insertion du dispositif de fixation (10) depuis le dessus du trou monté (53) de l'élément monté (52) avec l'élément inférieur (26) inséré en premier,
une étape destinée à la mise en contact de la bride (11) avec la surface supérieure de l'organe monté (52),
une étape destinée à fournir les parties en gradins des éléments de verrouillage de jambe d'ancrage (25) de manière à faire saillie sous le trou monté (53) de l'élément monté (52), et
une étape destinée à prendre en sandwich l'élément monté (52) entre la bride (11) et les parties en gradins des éléments de verrouillage de jambe d'ancrage (25),
**caractérisé en ce que** la bride (11) présente une partie périphérique externe et un élément mince (11a) avec une épaisseur inférieure à celle de la partie périphérique externe sur le côté interne de la partie périphérique externe, et la bride (11) est facilement pliée ;
dans lequel l'étape d'insertion du dispositif de fixation (10) depuis le dessus du trou de montage de l'élément monté (52) avec l'élément inférieur (26) inséré en premier est l'étape finale consistant à pousser le dispositif de fixation (10) dans le trou monté (53) de l'élément monté (52) ;
et dans lequel la quantité de changement d'une seconde charge, à laquelle la seconde charge destinée à pousser les éléments de verrouillage de jambe d'ancrage (25) dans le trou monté (53) de l'élément monté (52) devient plus petite, est supérieure ou égale à la quantité de changement dans une première charge, à laquelle la première charge destinée à déformer la bride (11) en pressant la bride (11) contre la surface supérieure de l'élément monté (52) devient plus grande ; et
la charge de poussée du dispositif de fixation (10), qui est la somme de la première charge et de la seconde charge, diminue progressivement ou ne change pas à l'étape finale de poussée.

2. Structure de montage comprenant un élément en forme de feuille (50), un élément monté (52) et un dispositif de fixation (10) destiné à monter l'élément en forme de feuille (50) sur l'élément monté (52),
dans laquellele dispositif de fixation (10) comprend :
un élément d'arbre cylindrique (12) ;
une bride (11), qui est prévue à l'extrémité inférieure de l'élément d'arbre (12) et qui présente un diamètre plus grand que celui de l'élément d'arbre ; (12)
une pluralité de pièces de maintien (21), qui sont prévues à l'extrémité supérieure de l'élément d'arbre (12) et qui sont capables d'être pliées radialement vers l'extérieur à partir des charnières (22) ;
un élément de tête (23), qui relie les extrémités supérieures des pièces de maintien (21) ensemble ;
un élément de guidage (24), qui s'étend depuis l'élément de tête (23) dans la direction vers le bas ;
un élément inférieur (26), qui est prévu sous l'élément de guidage (24) ; et une paire d'éléments de verrouillage de jambe d'ancrage (25), qui s'étendent obliquement vers le haut depuis l'élément inférieur (26) ;
des éléments construits (28) sont prévus au niveau d'une partie de racine où les éléments de verrouillage de jambe d'ancrage (25) sont reliés à l'élément inférieur (26), et les éléments de verrouillage de jambe d'ancrage (25) sont difficiles à plier ;
l'élément de guidage (24) comprend un élément supérieur situé sous l'élément de tête (23), des éléments de gradin de guidage (27) situés sous l'élément supérieur et un élément inférieur situé sous les éléments de gradin de guidage (27) ;
l'élément supérieur et les éléments de gradin de guidage (27) de l'élément de guidage (24) sont positionnés dans un espace à l'intérieur de l'élément d'arbre (12) ;
l'élément inférieur de l'élément de guidage (24) et les éléments de verrouillage de jambe d'ancrage (25) font saillie sous l'élément d'arbre (12) ;
l'élément en forme de feuille (50) est pris en sandwich entre la pluralité de pièces de maintien (21) et la bride (11), et
l'élément monté (52) est pris en sandwich entre la bride (11) et des parties en gradins des éléments de verrouillage de jambe d'ancrage (25),
**caractérisé en ce que** la bride (11) présente une partie périphérique externe et un élément mince (11a) avec une épaisseur inférieure à celle de la partie périphérique externe sur le côté interne de la partie périphérique externe, et la bride (11) est facilementpliée ;
dans lequel la structure de montage est conçue et fournie pour monter l'élément en forme de feuille (50) sur l'élément monté (52) en utilisant le dispositif de fixation (10) dans un procédé selon la revendication 1.

3. Structure de montage selon la revendication 2,
dans laquelle une partie concave de verrouillage (14) est formée à l'extrémité inférieure de l'élément d'arbre (12), et les pointes (25a) des éléments de verrouillage de jambe d'ancrage (25) sont logées dans la partie concave de verrouillage (14).
